# EUROPEAN PATENT SPECIFICATION

(11) **EP 1 725 151 B1**
(45) Date of publication and mention of the grant of the patent: **14.04.2010**
(21) Application number: 05755458.6
(22) Date of filing: 08.04.2005
(51) Int. Cl.: A47J 31/44

(54) **DEVICE FOR PRODUCING A MILK-BASED DRINK**
VORRICHTUNG ZUR HERSTELLUNG EINES MILCHGETRÄNKS
DISPOSITIF DE PRODUCTION DE BOISSON A BASE DE LAIT

(30) Priority: 21.04.2004 IT MI20040777
(43) Date of publication of application: 29.11.2006
(60) Divisional application: 08020407.6
(73) Proprietor: De'Longhi SpA, 31100 Treviso (IT)
(72) Inventor: MARCONI, Gian, Carlo, I-31057 Silea (IT)
(74) Representative: Rapisardi, Mariacristina
(86) International application number: PCT/EP2005/003731
(87) International publication number: WO 2005/102126

(56) References cited:
- EP-A- 1 374 748
- US-A- 5 490 447
- US-A- 5 738 002

## Description

The present invention refers to a device for producing a milk-based drink, in particular to a cappuccino, but more generally also to a coffee and milk drink without froth, or furthermore to a drink of just hot milk with or without froth.

It is known that in apparatuses for use in the home for preparing coffee or cappuccino there is a steam dispenser suitable for mixing the milk taken from a container with air to obtain a final emulsion of milk, air and steam that gives the drink the quantity of froth with the desired characteristics. An apparatus of this type is known from US 5738002A.

Such apparatuses suffer from some drawbacks, the greatest of which are those due to the awkwardness and poor versatility of use and to the difficulty of access to the inner parts for inspection.

Such apparatuses also do not have a system for cleaning the inner parts or have one that is not very effective so as to gradually bring about a deterioration of performance.

Moreover, the quality of the emulsion can often be penalised by the configuration and/or structural and/or functional characteristics of such conventional apparatuses. For example, the influence that the mixing operation of the milk with the air and the steam addition operation have upon each other, due to the fact that they are carried out in the same area, can have a negative influence upon the quality of the emulsion.

The technical task proposed of the present invention is, therefore, that of making a device for producing a milk-based drink that allows the aforementioned technical drawbacks of the prior art to be eliminated.

In this technical task a purpose of the invention is that of making a device for producing a milk-based drink that is versatile and extremely easy to use.

A further purpose of the present invention is that of providing a device for producing a milk-based drink that is easy to inspect and accessible in all of its parts.

Another purpose of the invention is that of providing a device for producing a milk-based drink that has a system for cleaning the inner parts that is extremely effective so as to keep a high standard of performance.

Another purpose of the present invention is that of providing an effective device for producing a milk-based drink such as to ensure that the drink always has the desired organoleptic characteristics.

The technical task, as well as these and other purposes, according to the present invention, are accomplished by making a device for producing a milk-based drink, according to claim 1.

Other characteristics of the present invention are defined, moreover, in the following claims.

Further characteristics and advantages of the invention shall become clearer from the description of a preferred but not exclusive embodiment of the device for producing a milk-based drink according to the finding, illustrated for indicating and not limiting purposes in the attached drawings, in which:
- figure 1 shows an enlarged axial section view of the steam/hot water dispenser - collector body assembly of the device for producing a milk-based drink of the present finding, in which the first scraping means of the air suction pathway and the second scraping means of the milk suction pathway are shown;
- figures 2 and 3 show possible variant embodiments of the dispensing channel of the steam/hot water dispenser and/or of the recess of the collector body into which it is introduced;
- figure 4 shows an axial section of the collector body of the device of figure 5;
- figure 5 shows a top side view of an axial section of the collector body and of the milk container of the device according to a further embodiment of the invention;
- figure 6 shows another perspective view of the device of figures 5;
- figure 7 shows the device of figure 6 disassembled into its constituent parts;

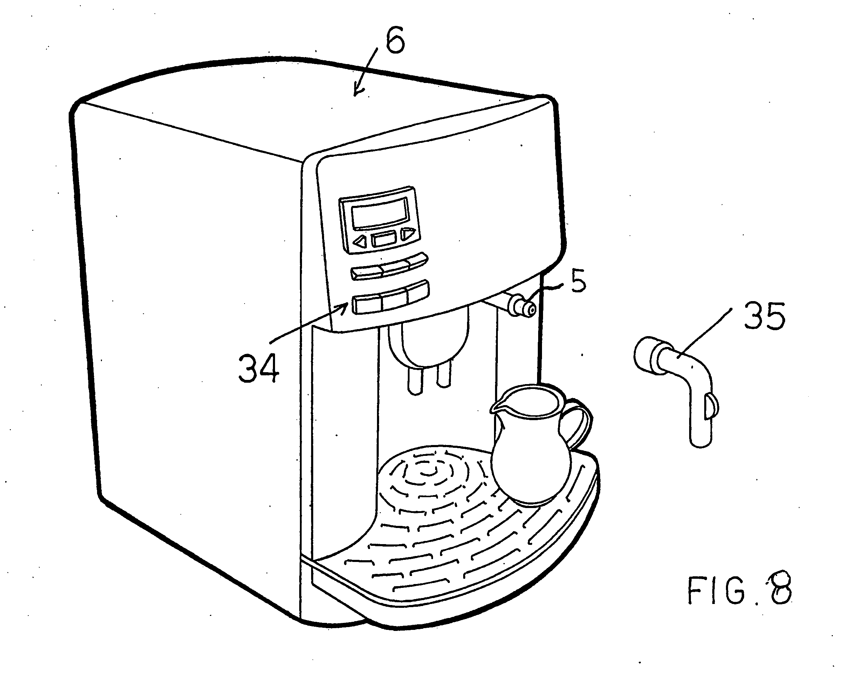

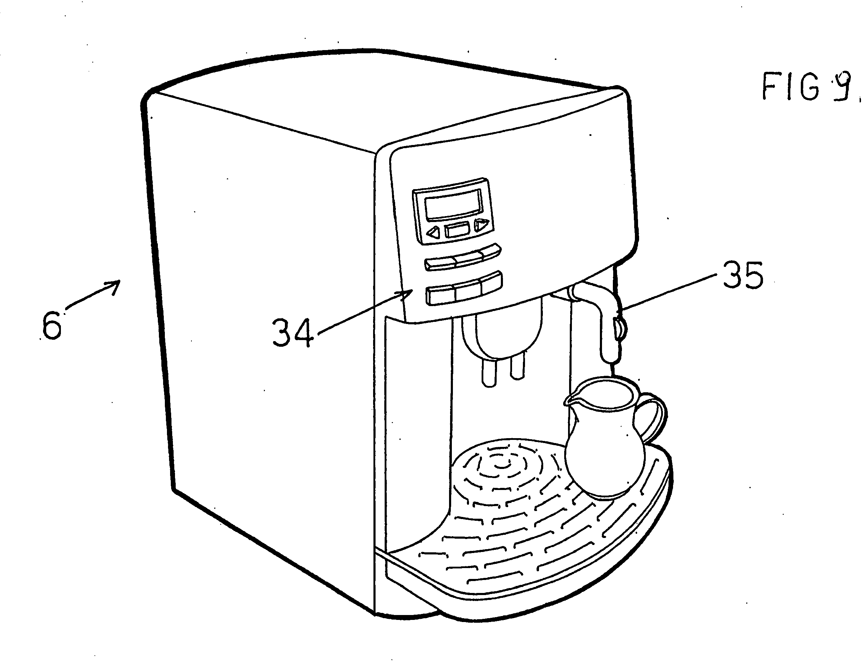

- figures 8 and 9 illustrate a coffee machine equipped with the original steam or hot water dispensing nozzle for the conventional production of a milk-based drink or other drinks;
- figure 10 shows a section view of a different preferred embodiment of a system for cleaning the air inlet to the collector body of a device according to the present invention;
- figure 11 show a section view of a further preferred embodiment of a system for cleaning the air inlet to the collector body and for adjusting the flow of air through it.

Equivalent parts of the different embodiments of the device in the following description shall be indicated by the same reference numeral.

With reference to the quoted figures, a device for producing a milk-based drink is shown, wholly indicated with reference numeral 1.

The device 1 comprises a steam or hot water dispenser 5 and a container 2 for the milk that is directly or indirectly connected to a collector body 3 removably associated with the dispenser 5.

The collector body 3 internally defines a recess 300 into which a connection pathway 401 to the dispenser 5, a suction pathway 7 of the milk present in the container 2 and an air suction pathway 10 open.

The collector body 3 can be carried by a cover 26 of the container 2, and in particular, as illustrated, can be formed integrally with it.

Preferably, the collector body 3 extends in a position outside and at the apex of a first side wall 14 of the container 2.

The steam or hot water dispenser 5 is, for example, that belonging, to a coffee machine 6.

The collector body 3 also has a discharge 8 from the recess 300, to which a discharge nozzle 9 is fitted.

The device 1 advantageously comprises at least first scraping means 402 suitable for carrying out a cleaning scrape of the inner surface of the air suction pathway 10.

Preferably, the device 1 also comprises second scraping means 408 suitable for carrying out a cleaning scrape of the inner surface of the milk suction pathway 7, carried by the dispenser 5 so as to be actuated automatically during its introduction and/or removal into/from the recess 300.

The second scraping means 408 can comprise at least one protrusion 416 of the side surface of the dispenser 5.

Finally, the device 1 can also comprise means 403 for adjusting the air flow rate through the air suction pathway 10, and possible manual control means 407 of the means 403 for adjusting the air flow rate.

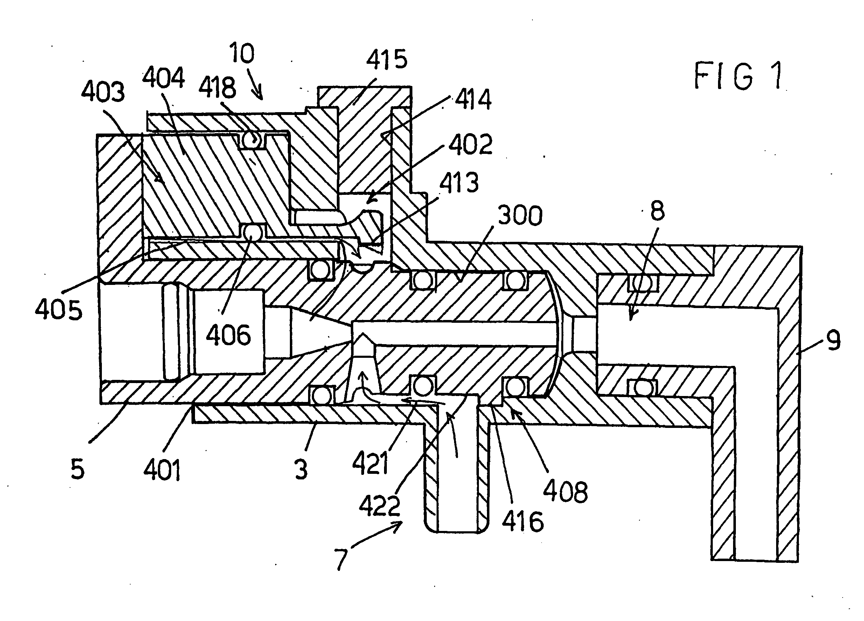

For now we shall refer to the embodiment illustrated in figure 1- 3, 10 and 11.

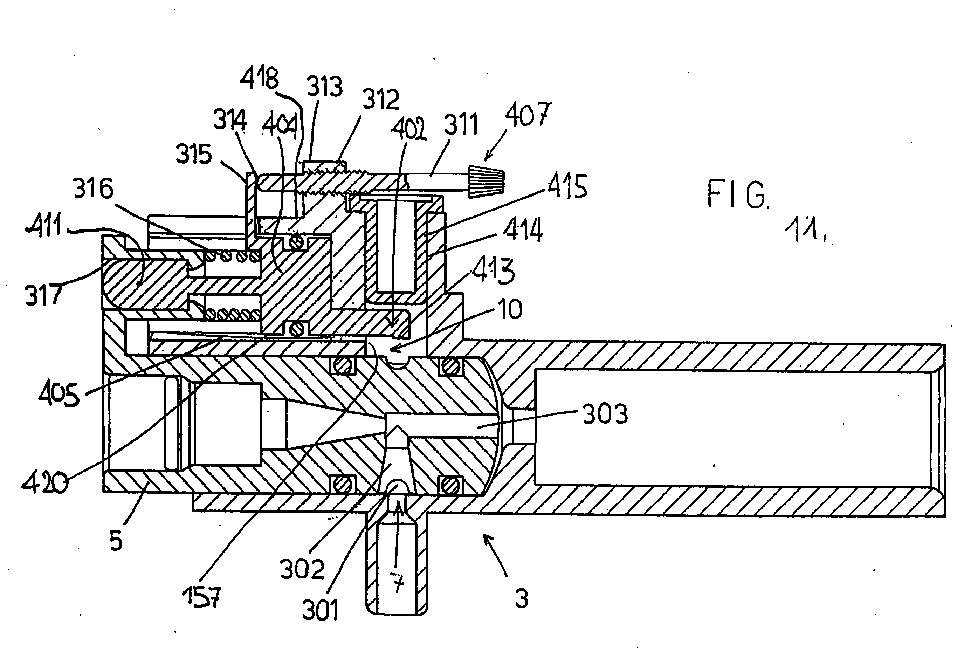

The first scraping means 402 are fixed rigidly (figures 1-3 and 10) or operatively (figure 11) to the dispenser 5 so as to be actuated automatically during its introduction and/or removal into/from the recess 300.

In the first case the first scraping means 402 in particular are formed 'integrally with the dispenser 5 (figures 1-3 and 10).

The means 403 for adjusting the air flow rate, on the other hand, comprise a shutter 404 that can slide in the suction pathway 10.

The shutter 404 is fixed rigidly (figures 1-3 and 10) or operatively (figure 11) to the dispenser 5.

In the first case the shutter 404 is formed integrally with the dispenser 5.

Between the side surface of the shutter 404 and the inner surface of the suction pathway 10 an interspace 420 is defined that is sealed by a sealing element, in particular a toroidal ring 418, carried peripherally by the shutter 404.

The inner surface of the air suction pathway 10 also has at least one tapered or inclined discharge 405, which determines the air flow rate according to the position of the shutter 404.

In figures 1-3 the discharge 405 has an interruption 406 so that when the sealing element 418 is at the interruption 406 the passage of air is totally blocked, whereas when the sealing element 418 is misaligned with the interruption 406 the air flow (indicated by an arrow) is allowed through the discharge 405 and the interspace 420.

The first scraping means preferably comprise an elastically yielding scraping tooth 413, in particular supported cantilevered by the shutter 404.

The scraping tooth 413 deforms elastically against the surface of the discharge 405 during the introduction of the dispenser 5, lifting up, until, disengaging from the end part 157 of the discharge 405, it lowers back down with a snap movement intended to release the accumulated elastic deformation and it positions itself along a line of interference with the end 157 of the discharge 405.

The scraping tooth 413, having the base inclined, moves automatically with respect to the line of interference with the end 157 of the discharge 405 to allow the disconnection of the dispenser 5 from the collector body 3.

For moulding purposes there is an opening 414 of the wall of the air suction pathway 10, closed by a cap 415.

The control means 407 (figure 11) comprise a thrusting member 311 suitable for moving the shutter 404 in opposition to the action of an elastic element 316, for example a spring, to be placed between the shutter 404 and the dispenser 5.

The thrusting member 311 is, for example, an adjustment screw engaged in a threaded seat 312 formed through a projection 313 of the collector body 3, the free end 314 of the screw 311 acting on an abutment 315 extending from the shutter 404 contrasting the action of the spring 316.

In such a case the shutter 404 has a tailpiece 411 slidably guided parallel to the main axis of the collector body 3 along a guide 317 integral, and in particular formed in a single piece, with the dispenser 5.

The turning of the screw 311 causes the abutment 315 and the shutter 404 to move forward or backward and consequently the port for the passage of the air flow to be adjusted.

Of course, the adjustment system can foresee, instead of the adjustment screw 311, an eccentric or a cam that is able to move the abutment 315.

In figures 1-3 and 11 the dispenser 5 defines a pre-mixing chamber 311 of the flows coming from the pathways 7 and 10, and the pre-mixing chamber 301 in turn communicates, through a preferably tapered transversal passage 301 of the dispenser 5, with the dispensing channel 303 of the dispenser 5.

In particular, a part of the pre-mixing chamber 301 can be formed from an annular channel of the side surface of the dispenser 5.

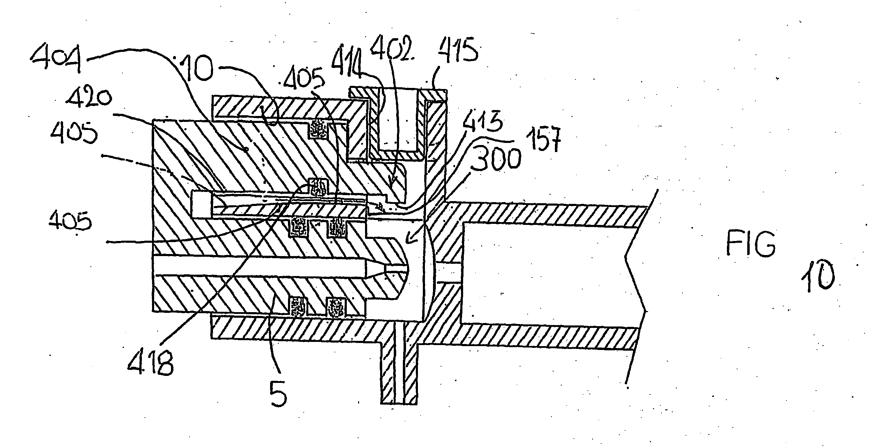

In figure 10, in the other hand, the flows from the pathways 7 and 10 and from the dispenser 5 mix in a single solution in a mixing chamber defined by the free portion of the recess 300 defined by the dispenser 5.

In figures 1-3, so that the second scraping means can operate, the milk suction pathway is misaligned from the transversal passage 302 of the dispenser 5 and therefore a connection passage 421 is foreseen defined by a side hollow 422 of the dispenser 5, whereas in figure 16, since the second scraping means are not foreseen, the milk suction pathway 7 and the transversal passage 302 of the dispenser 5 are aligned and directly communicate.

The channel of the dispenser 5 must optimise the emulsion and at the same time be easy to inspect and clean.

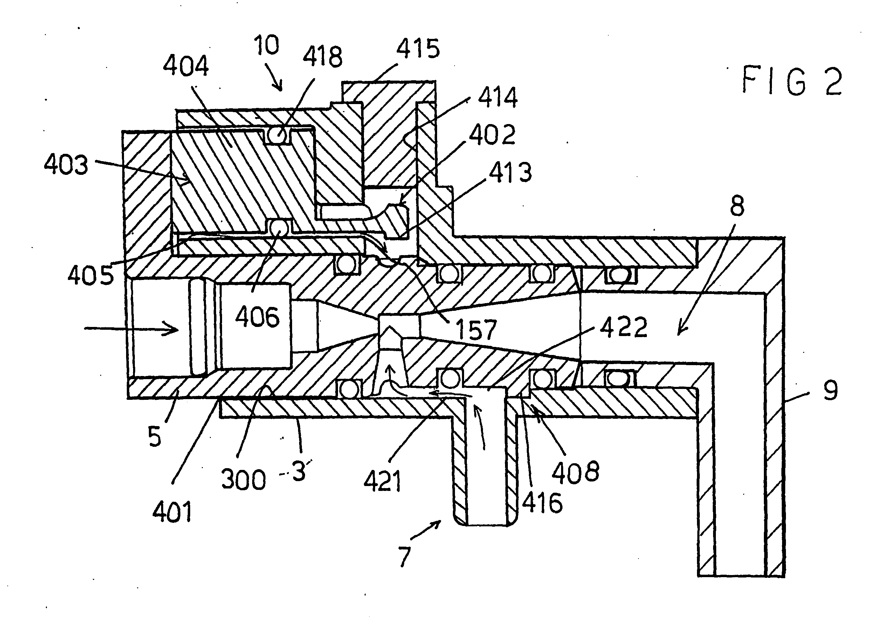

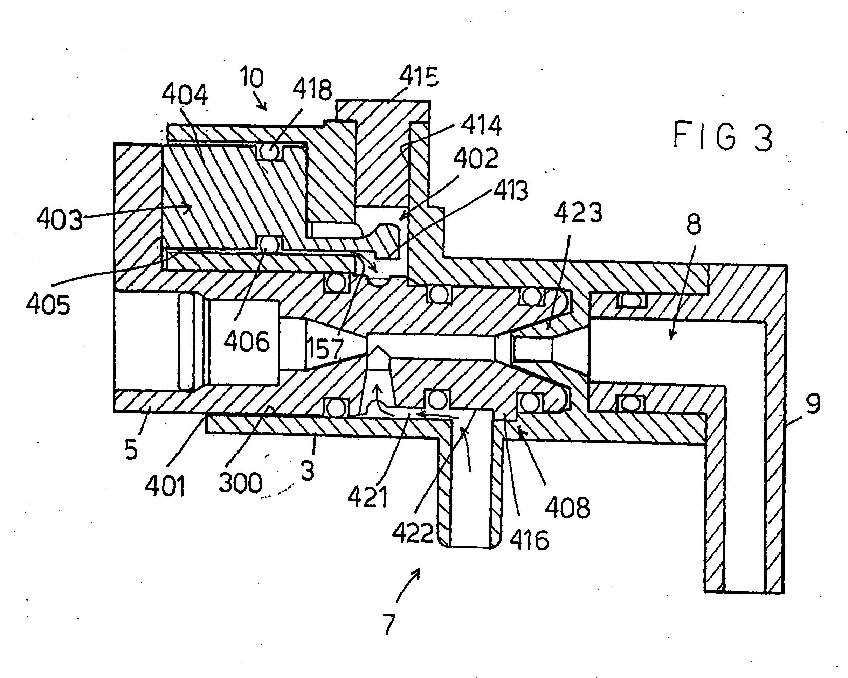

Many geometries are proposed the achieve the objective, and in particular in figures 1 and 10 the channel of the dispenser is rectilinear, in figure 2 it is divergent, and in figure 3 it is mixed with an initial rectilinear part and a divergent end part in which a reducer 423 is inserted formed integrally from the collector body 3.

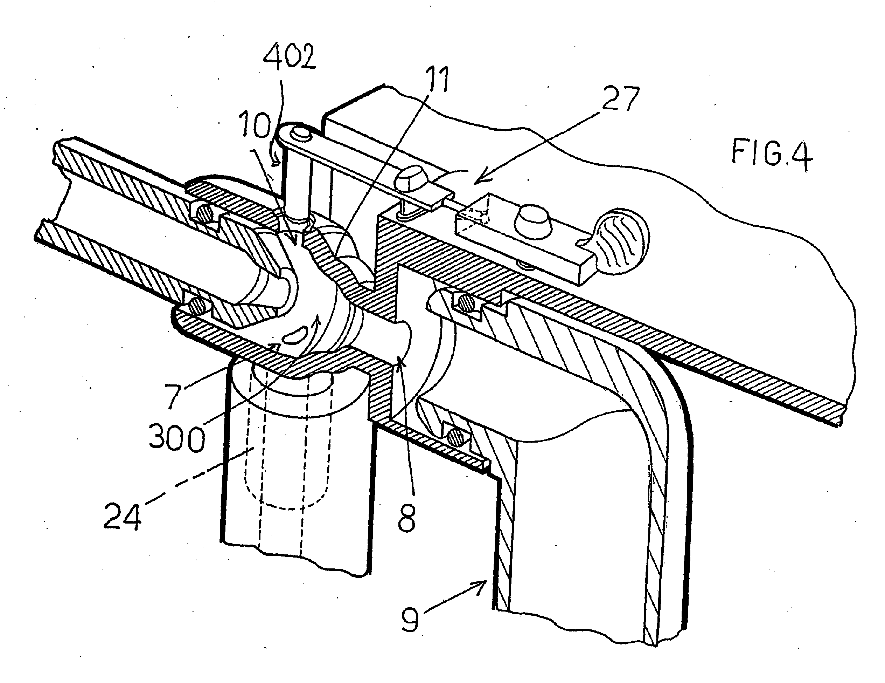

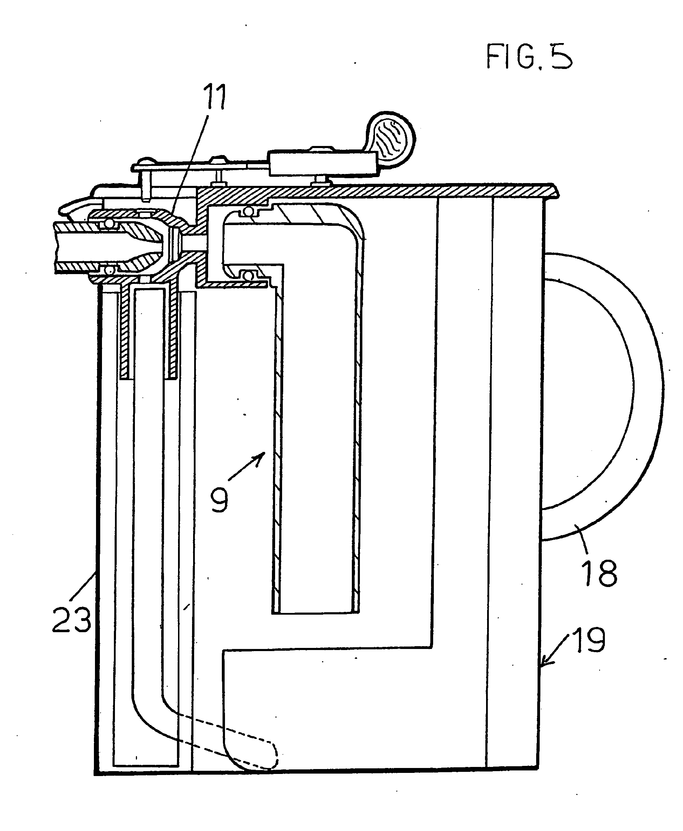

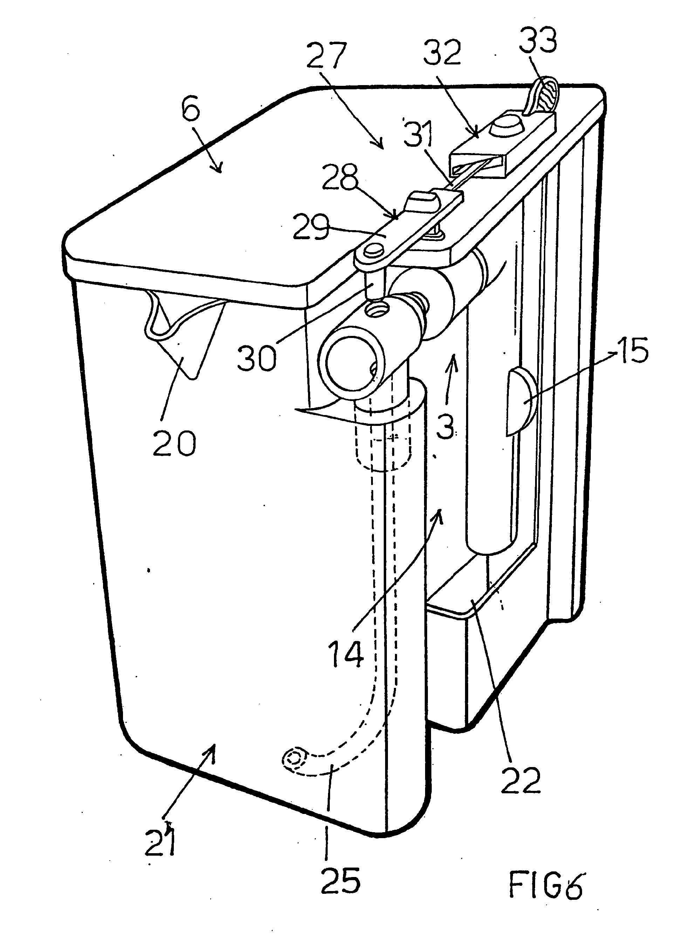

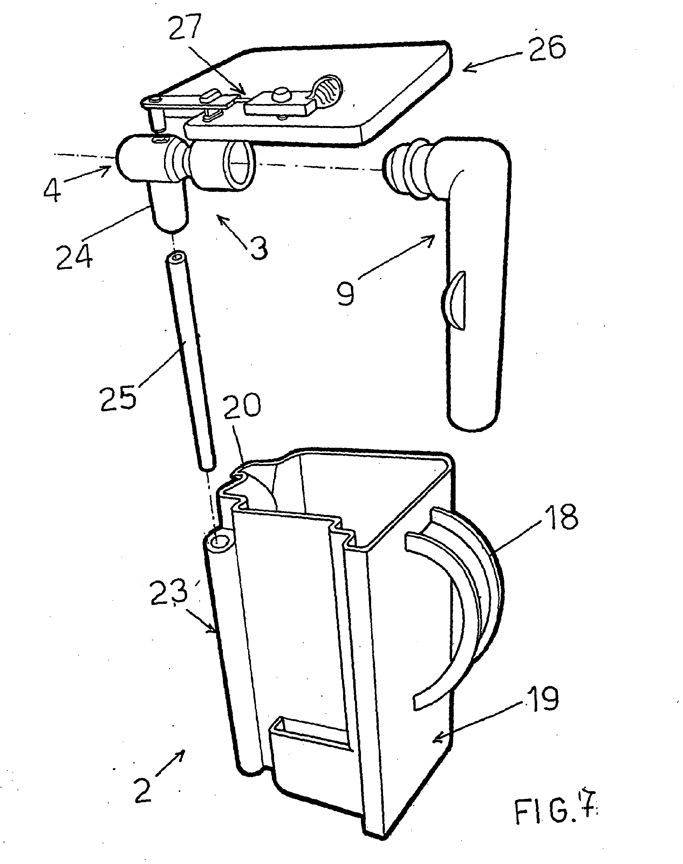

We shall now refer, in particular, to figures 4-7.

Amongst other things, they show a different embodiment of the first scraping means.

In particular, the pathway 4 and the discharge pathway 8 are arranged in parallel along the main axis of the collector body 3, whereas the milk inlet pathway 7 and the air inlet pathway 10 are arranged transversally to the main axis of the collector body 3 and diametrically opposite.

Like in figure 10, the flows from the pathways 7 and 10 and from the dispenser 5 mix in a single solution in the mixing chamber defined by the free portion of the recess 300 defined by the dispenser 5.

In this case, then, the recess 300 has a convergent portion 11, suitable for creating a Venturi effect that determines the sucking up of milk from the container 2 when it is crossed by the flow of steam.

The scraping means for cleaning the inner surface of the pathway 10 are advantageously actuated by a manually controlled leverism 27 pivoted directly on the cover 26.

The leverism 27 comprises a lever 28 that can be operated perpendicular to the lying plane of the cover 26 and having a first lever arm 29 carrying a scraping finger 30 of the third pathway 10 and a second lever arm 31 arranged in a guide pivoted on the cover 26 and rotatable parallel to the lying plane of the cover 26.

The guide 32 has a guide plane that is inclined with respect to the lying plane of the cover 26 so that a rotation in one direction and, respectively, in the opposite direction commands the lowering and raising, respectively, of the first lever arm 31 and consequently the extraction and introduction, respectively, of the scraping finger 30 into/from the pathway 10.

The control of the leverism 27 is carried out manually through an ear 33 integral with the guide 32.

The device for producing a milk-based drink thus conceived can undergo numerous modifications and variants, all of which are covered by the inventive concept; moreover, all of the details can be replaced with technically equivalent elements. In practice, the materials used, as well as the sizes, can be whatever according to the requirements and the state of the art.

## Claims

1. Device (1) for producing a milk-based drink, comprising a steam or water dispenser (5) and a container (2) for the milk that is connected, directly or indirectly, to a collector body (3) that defines an inner recess (300) into which a connection pathway (401) to said dispenser (5), a milk suction pathway (7) in said container (2) and an air suction pathway (10) open, said container (2) being removably associated with said dispenser (5) so as to be able to be separated from it for conservation of the milk present in said container (2), **characterised in that** it also comprises at least first scraping means (402) suitable for scraping clean the inner surface of said air suction pathway (10).

2. Device according to claim 1, **characterised in that** said first scraping means (402) are rigidly or operatively connected to said dispenser (5) so as to be actuated automatically during the introduction and/or removal of said dispenser (5) in said recess (300).

3. Device according to one or more of the previous claims, **characterised in that** said first scraping means (402) are formed integrally with said dispenser (5).

4. Device according to any one of the previous claims, **characterised in that** it comprises means (403) for adjusting the air flow rate through said air suction pathway (10).

5. Device according to any one of the previous claims, **characterised in that** said means (403) for adjusting the air flow rate comprise a shutter (404) that can slide in said air suction pathway (10).

6. Device according to any one of the previous claims, **characterised in that** said shutter (404) is rigidly or operatively connected to said dispenser (5).

7. Device according to any one of the previous claims, **characterised in that** said shutter (404) is formed integrally with said dispenser (5).

8. Device according to one or more of the previous claims, **characterised in that** it has manual control means (407) of said means (403) for adjusting the air flow rate.

9. Device according to one or more of the previous claims, **characterised in that** said control means (407) of said shutter (404) comprise a thrusting member (311) suitable for moving said shutter (404) against the action of an elastic element (316) placed between said shutter (404) and said dispenser (5).

10. Device according to any one of the previous claims, **characterised in that** said shutter (404) peripherally carries a sealing element (418) suitable for sealing the interspace (420) existing between the side surface of said shutter (404) and the inner surface of said air suction pathway (10).

11. Device according to any one of the previous claims, **characterised in that** the inner surface of said air suction pathway (10) has at least one tapered or inclined discharge (405) suitable for determining the air flow rate according to the position of said shutter (404).

12. Device according to any one of the previous claims, **characterised in that** said discharge (405) has an interruption (406) so that when said sealing element (418) is at said interruption (406) the passage of air is totally blocked, whereas when said sealing element (418) is misaligned with said interruption (406) the air flow is allowed through said discharge (405) and said interspace (420).

13. Device according to any one of the previous claims, **characterised in that** said first scraping means (402) comprise an elastically yielding scraping tooth (413).

14. Device according to any one of the previous claims, **characterised in that** said scraping tooth (413) has an inclined base suitable for allowing the disconnection of said dispenser (5) from said collector body (3).

15. Device according to any one of the previous claims, **characterised in that** it comprises second scraping means (408) suitable for carrying out a cleaning scrape of the inner surface of said milk suction pathway, (7) carried by said dispenser (5) so as to be actuated automatically during the introduction and/or removal of said dispenser (5) into/from said recess (300).

16. Device according to any one of the previous claims, **characterised in that** said second scraping means (408) comprise a protrusion (416) of the side surface of said dispenser (5).

17. Device according to any one of the previous claims, **characterised in that** said dispenser (5) defines, in said recess (300) of said collector body (3), a mixing chamber where the flows coming from said dispenser, said air suction pathway (10) and said milk suction pathway (7) flow together.

18. Device according to any one of the previous claims, **characterised in that** said dispenser (5) defines, in said recess (300) of said collector body, a pre-mixing chamber (311) of the flows coming from said air suction pathway (10) and said milk suction pathway (7), said pre-mixing chamber (311) communicating through a transversal passage (301) of said dispenser (5) with the dispensing channel (303) of said dispenser (5).

19. Device for producing a milk-based drink according to one or more of the previous claims, **characterised in that** said first scraping means (402) comprise a scraping finger (30) carried by a manually controlled first lever arm (29) pivoted on said cover (26) of said container, said lever being able to be operated perpendicular to the lying plane of said cover (26) and having a second lever arm (31) and arranged in a guide (32) pivoted on said cover (26) and able to be rotated parallel to the lying plane of said cover.

## Patentansprüche

1. Vorrichtung (1) zur Erzeugung eines Getränks auf Milchbasis, die einen Dampf- oder Wasserverteiler (5) und einen Behälter (2) für die Milch aufweist welcher, direkt oder indirekt, mit einem Sammelgehäuse (3) verbunden ist, das eine Innenaussparung (300) bestimmt, in der sich eine Anschlussstrecke (401) zum genannten Verteiler (5), eine Absaugstrecke (7) der Milch in den genannten Behälter (2) und eine Luftabzugsstrecke (10) öffnen, wobei der genannte Behälter (2) abnehmbar mit dem genannten Verteiler (5) verbunden ist und somit von diesem für die Konservierung der in dem Behälter (2) aufbewahrten Milch getrennt werden kann,
**dadurch gekennzeichnet, dass** diese ebenfalls mindestens erste Schabemittel (402) aufweist, die zur Reinigung durch Abschaben der inneren Oberfläche der genannten Luftabzugsstrecke (10) geeignet sind.

2. Vorrichtung nach Anspruch 1, **dadurch gekennzeichnet, dass** die genannten ersten Schabemittel (402) fest oder operativ an den genannten Verteiler (5) angeschlossen sind, sodass diese bei der Einführung und/oder Entfernung des genannten Verteilers (5) in/aus der genannten Aussparung (300) automatisch ausgelöst werden.

3. Vorrichtung nach einem oder mehreren der vorhergehenden Ansprüche, **dadurch gekennzeichnet, dass** die genannten ersten Schabemittel (402) einstückig mit dem genannten Verteiler (5) geformt sind.

4. Vorrichtung nach einem der vorhergehenden Ansprüche, **dadurch gekennzeichnet, dass** diese Mittel (403) zur Einstellung des Luftdurchflusses durch die genannte Luftabzugsstrecke (10) aufweist.

5. Vorrichtung nach einem der vorhergehenden Ansprüche, **dadurch gekennzeichnet, dass** die genannten Mittel (403) zur Einstellung des Luftdurchflusses eine Lüftungsklappe (404) aufweisen, welche innerhalb der genannten Luftabzugsstrecke (10) gleiten kann.

6. Vorrichtung nach einem der vorhergehenden Ansprüche, **dadurch gekennzeichnet, dass** die ganannte Lüftungsklappe (404) fest oder operativ mit dem genannten Verteiler (5) verbunden ist.

7. Vorrichtung nach einem der vorhergehenden Ansprüche, **dadurch gekennzeichnet, dass** die genannte Lüftungsklappe (404) einstückig mit dem genannten Verteiler (5) geformt ist.

8. Vorrichtung nach einem oder mehreren der vorhergehenden Ansprüche, **dadurch gekennzeichnet, dass** diese manuelle Steuerungsmittel (407) der genannten Mittel (403) zur Einstellung des Luftdurchflusses aufweist.

9. Vorrichtung nach einem oder mehreren der vorhergehenden Ansprüche, **dadurch gekennzeichnet, dass** die genannten Steuerungsmittel (407) der genannten Lüftungsklappe (404) ein Schubglied (311) aufweisen, welches zur Verschiebung gegen die Spannungskraft eines zwischen der genannten Lüftungsklappe (404) und dem genannten Verteiler (5) untergebrachten elastischen Bestandteils (316) geeignet ist.

10. Vorrichtung nach einem der vorhergehenden Ansprüche, **dadurch gekennzeichnet, dass** die genannte Lüftungsklappe (404) ein peripheres Abdichtungselement (418) trägt, welches zur Abdichtung des bestehenden Zwischenraums (420) zwischen der Seitenoberfläche der genannten Lüftungsklappe (404) und der inneren Oberfläche der genannten Luftabzugsstrecke (10) geeignet ist.

11. Vorrichtung nach einem der vorhergehenden Ansprüche, **dadurch gekennzeichnet, dass** die innere Oberfläche der genannten Luftabzugsstrecke (10) mindestens einen kegelförmigen oder schrägen Ablass (405) hat, welcher zur Bestimmung des Luftdurchflusses in Übereinstimmung mit der Stellung der genannten Lüftungsklappe (404) geeignet ist.

12. Vorrichtung nach einem der vorhergehenden Ansprüche, **dadurch gekennzeichnet, dass** der genannte Ablass (405) eine Unterbrechung (406) hat, sodass wenn der genannte Abdichtungsteil (418) sich an dieser Unterbrechung (406) befindet, der Luftdurchzug vollkommen gesperrt ist, während wenn der genannte Abdichtungsteil (418) nicht an die genannte Unterbrechung (406) angepasst ist, der Luftstrom durch den genannten Ablass (405) und den genannten Zwischenraum (420) dringen kann.

13. Vorrichtung nach einem der vorhergehenden Ansprüche, **dadurch gekennzeichnet, dass** die genannten ersten Schabemittel (402) einen elastisch nachgebenden Schabezahn (413) aufweisen.

14. Vorrichtung nach einem der vorhergehenden Ansprüche, **dadurch gekennzeichnet, dass** der genannte Schabezahn (413) eine geneigte Grundfläche hat, welche zur möglichen Trennung des genannten Verteilers (5) von dem genannten Sammelgehäuse (3) geeignet ist.

15. Vorrichtung nach einem der vorhergehenden Ansprüche, **dadurch gekennzeichnet, dass** diese zweite Schabemittel (408) aufweist, welche zur Reinigung durch Abschaben der inneren Oberfläche der genannten Absaugstrecke (7) der Milch, die von dem genannten Verteiler (5) getragen wird, geeignet ist, sodass diese bei der Einführung und/oder Entfernung des genannten Verteilers (5) in/aus der genannten Aussparung (300) automatisch ausgelöst werden.

16. Vorrichtung nach einem der vorhergehenden Ansprüche, **dadurch gekennzeichnet, dass** die genannten zweiten Schabemittel (408) einen Vorsprung (416) der Seitenoberfläche des genannten Verteilers (5) aufweisen.

17. Vorrichtung nach einem der vorhergehenden Ansprüche, **dadurch gekennzeichnet, dass** der genannte Verteiler (5), in der genannten Aussparung (300) des genannten Sammelgehäuses (3), eine Mischkammer bestimmt, in der die aus dem genannten Verteiler, aus der genannten Luftabzugsstrecke (10) und aus der genannten Absaugstrecke (7) der Milch kommenden Strömungen zusammen fließen.

18. Vorrichtung nach einem der vorhergehenden Ansprüche, **dadurch gekennzeichnet, dass** der genannte Verteiler (5), in der genannten Aussparung (300) des genannten Sammelgehäuses, eine Vormischkammer (311) der aus der genannten Luftabzugsstrecke (10) und aus der genannten Absaugstrecke (7) der Milch kommenden Strömungen bestimmt, wobei die genannte Vormischkammer (311) durch eine querliegende Öffnung (301) des genannten Verteilers (5) mit dem Verteilungskanal (303) des genannten Verteilers (5) verbunden ist.

19. Vorrichtung zur Erzeugung eines Getränks auf Milchbasis nach einem oder mehreren der vorhergehenden Ansprüche, **dadurch gekennzeichnet, dass** die genannten ersten Schabemittel (402) einen Schabefinger (30) aufweisen, welcher von einem manuell gesteuerten und schwenkbar an den genannten Deckel (26) des genannten Behälters angebrachten ersten Hebelarms (29) getragen ist, wobei dieser Hebel sekrecht zu der liegenden Ebene des genannten Deckels (26) betrieben werden kann und wobei diese einen zweiten Hebelarm (31) aufweist, welcher in einer schwenkbar an den genannten Deckel (26) angebrachten Führungsbahn (32) untergebracht ist und welcher parallel zu der liegenden Ebene des genannten Deckels gedreht werden kann.

## Revendications

1. Dispositif (1) pour produire une boisson à base de lait, comprenant un distributeur (5) de vapeur ou d'eau et un récipient (2) pour le lait qui est joint, directement ou indirectement, à un corps (3) d'un collecteur qui définit une cavité intérieure (300) à l'intérieur de la quelle s'ouvrent un parcours d'assemblage (401) avec le dit distributeur (5), un parcours (7) d'aspiration du lait dans dit récipient (2) et un parcours (10) d'aspiration de l'air, le dit récipient (2) étant associé avec possibilité d'enlèvement au dit distributeur (5) à fin de pouvoir être séparé de celui pour une conservation du lait présent dans le dit récipient (2),
**caractérisé en ce qu'**il comprend aussi au moins des premiers moyens racleurs (402) aptes à racler et nettoyer la surface intérieure du dit parcours (10) d'aspiration de l'air.

2. Dispositif selon la revendication 1, **caractérisé en ce que** les dit premiers moyens racleurs (402) sont assemblés rigidement ou sur le plan opérationnel au dit distributeur (5) à fin d'être actionnés automatiquement pendant l'introduction et/ou l'enlèvement du dit distributeur (5) dans la dite cavité (300).

3. Dispositif selon une ou plusieurs des revendications précédentes, **caractérisé en ce que** les dits premiers moyens racleurs (402) sont formés intégralement avec le dit distributeur (5).

4. Dispositif selon une quelconque des revendications précédentes, **caractérisé en ce qu'**il comprend des moyens (403) pour régler le débit de l'air à travers du dit parcours (10) d'aspiration de l'air.

5. Dispositif selon une quelconque des revendications précédentes, **caractérisé en ce que** les dits moyens (403) pour régler le débit de l'air comprennent un obturateur (404) qui peut coulisser dans le dit parcours (10) d'aspiration de l'air.

6. Dispositif selon une quelconque des revendications précédentes, **caractérisé en ce que** le dit obturateur (404) est assemblé rigidement ou sur le plan opérationnel au dit distributeur (5).

7. Dispositif selon une quelconque des revendications précédentes, **caractérisé en ce que** le dit obturateur (404) est formé intégralement avec le dit distributeur (5).

8. Dispositif selon une ou plusieurs des revendications précédentes, **caractérisé en ce qu'**il présente des moyens de commande manuels (407) des dits moyens (403) pour régler le débit de l'air.

9. Dispositif selon une ou plusieurs des revendications précédentes, **caractérisé en ce que** les dits moyens de commande (407) du dit obturateur (404) comprennent un élément de poussée (311) apte à déplacer le dit obturateur (404) contre l'action d'un élément élastique (316) disposé entre le dit obturateur (404) et le dit distributeur (5).

10. Dispositif selon une quelconque des revendications précédentes, **caractérisé en ce que** le dit obturateur (404) porte en sens périphérique un élément d'étanchéité (418) apte à fermer avec étanchéité l'espace (420) existant entre la surface latérale du dit obturateur (404) et la surface intérieure du dit parcours (10) d'aspiration de l'air.

11. Dispositif selon une quelconque des revendications précédentes, **caractérisé en ce que** la surface intérieure du dit parcours (10) d'aspiration de l'air a au moins un déchargement unique (405) effilé ou incliné, apte à déterminer le débit de l'air en conformité avec la position du dit obturateur(404).

12. Dispositif selon une quelconque des revendications précédentes, **caractérisé en ce que** le dit déchargement (405) a une interruption (406), par conséquent quand le dit élément d'étanchéité (418) se trouve en correspondance avec la dit interruption (406), le passage de l'air est totalement bloqué, alors que quand le dit élément d'étanchéité (418) n'est pas aligné avec la dite interruption (406), le fluxe de l'air peut passer à travers du dit déchargement (405) et du dit espace (420) interposé.

13. Dispositif selon une quelconque des revendications précédentes, **caractérisé en ce que** les dits premiers moyens racleurs (402) comprennent une dent racleuse (413) qui peut céder élastiquement.

14. Dispositif selon une quelconque des revendications précédentes, **caractérisé en ce que** la dite dent racleuse (413) a une base inclinée apte à permettre la séparation de l'assemblage entre le dit distributeur (5) ed le dit corps (3) du collecteur.

15. Dispositif selon une quelconque des revendications précédentes, **caractérisé en ce qu'**il comprend des secondes moyens racleurs (408) aptes à effectuer un nettoyage avec raclage de la surface intérieure du dit parcours (7) d'aspiration du lait, effectué par le dit distributeur (5), à fin d'être actionné automatiquement pendant l'introduction et/ou l'enlèvement du dit distributeur (5) par rapport à la dite cavité (300).

16. Dispositif selon une quelconque des revendications précédentes, **caractérisé en ce que** les dits secondes moyens racleurs (408) comprennent une saillie (416) de la surface latérale du dit distributeur (5).

17. Dispositif selon une quelconque des revendications précédentes, **caractérisé en ce que** le dit distributeur (5) définit, dans la dite cavité (300) du collecteur (3), une chambre de mélange dans la quelle se rencontrent les fluxes venant du dit distributeur, du dit parcours (10) d'aspiration de l'air et du dit parcours (7) d'aspiration du lait.

18. Dispositif selon une quelconque des revendications précédentes, **caractérisé en ce que** le dit distributeur définit, dans la dite cavité (300) du dit corps du collecteur, une chambre (311) de mélange préliminaire des fluxes venant du dit parcours (10) d'aspiration de l'air et du dit parcours (7) d'aspiration du lait, la dite chambre (311) de mélange préliminaire communiquant à travers d'un passage transversal (301) du dit distributeur (5) avec le canal de distribution (303) du dit distributeur (5).

19. Dispositif pour produire une boisson à base de lait selon une ou plusieurs des revendications précédentes, **caractérisé en ce que** les dits premiers moyens racleurs (402) comprennent un appendice de raclage (30) porté par un premier bras de levier (29) à commande manuel coulissant sur le dit couvercle (26) du dit récipient, le dit levier étant en gré d'être actionné en perpendiculaire par rapport au plan où se trouve le dit couvercle (26) et ayant un second bras de levier (31) et étant disposé dans une guide (32) pivotée sur le dit couvercle (26) et en gré d'être pivotée parallèlement au plan dans le quel se trouve le dit couvercle.
